(19) **Europäisches Patentamt**

**European Patent Office**

**Office européen des brevets**

(11) **EP 1 032 210 B1**

(12) **EUROPEAN PATENT SPECIFICATION**

(45) Date of publication and mention
of the grant of the patent:
**26.02.2003 Bulletin 2003/09**

(51) Int Cl.[7]: **H04N 7/24**, H04N 7/36

(21) Application number: **00109705.4**

(22) Date of filing: **28.07.1992**

(54) **Encoding method**

Kodierungsverfahren

Méthode de codage

(84) Designated Contracting States:
**GB**

(30) Priority: **03.08.1991 JP 19457691**

(43) Date of publication of application:
**30.08.2000 Bulletin 2000/35**

(62) Document number(s) of the earlier application(s) in
accordance with Art. 76 EPC:
**98203273.2 / 0 891 091**
**92306852.2 / 0 527 011**

(73) Proprietor: **SONY CORPORATION**
**Tokyo 141 (JP)**

(72) Inventors:
• **Yagasaki, Yoichi, c/oInt. Prop. Dpt., Sony Corp.**
**Tokyo 141 (JP)**
• **Yonemitsu, Jun, c/oInt. Prop. Dpt., Sony Corp.**
**Tokyo 141 (JP)**
• **Mark, Veltman, c/oInt. Prop. Dpt., Sony Corp.**
**Tokyo 141 (JP)**
• **Igarashi, Katsuji, c/oInt. Prop. Dpt., Sony Corp.**
**Tokyo 141 (JP)**

(74) Representative: **Pratt, Richard Wilson et al**
**D. Young & Co,**
**21 New Fetter Lane**
**London EC4A 1DA (GB)**

(56) References cited:
**EP-A- 0 150 935          US-A- 4 816 914**
**US-A- 4 901 075**

• **LANGDON G.: "An introduction to arithmetic
coding" IBM J. RES. DEVELOP., vol. 28, no. 2,
March 1984 (1984-03), pages 135-149,
XP002086019**

**Description**

The invention relates to a variable length coding method for motion vector used in highly efficient coding of a moving picture signal, for example, based on interframe correlation.

US-A-4816914 discloses method encoding motion vertors.

When coding which utilizes interframe correlation is done in highly efficient coding of a moving picture signal, a difference between frames is coded. At this time, a motion vector is used to consider a movement between two frames.

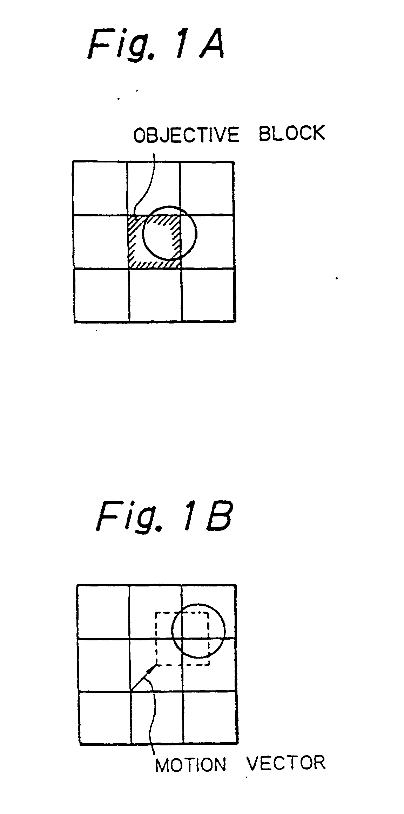

More specifically, a picture is divided into blocks of a predetermined size (for example, 16 x 16 picture elements shown in Fig. 1A). In this case, a motion vector indicates that a certain block (objective block) has moved to what position on another picture from which a difference is taken (shown in Fig. 1B).

When a difference with a position which has moved by a motion vector is taken in the case of providing a difference of two frames, the difference is a minimum to enable highly efficient coding. Conversely speaking, if the motion vector is obtained so that the difference between frames becomes a minimum, such highly efficient coding can be made.

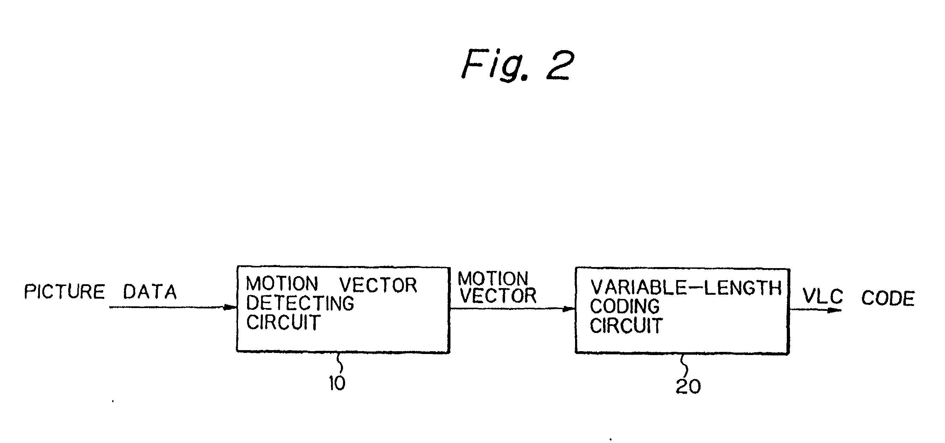

Now, for improving transmission efficiency of the motion vector, the variable length coding of the motion vector has been known. Namely, as shown in Fig. 2, picture data is supplied to a motion vector detecting circuit 10 to detect a motion vector. The motion vector is given to a variable length coding circuit 20 and coded to provide a variable length coding code (VLC code).

As to the motion vector, its size and accuracy are theoretically arbitrary, and there is restriction on hardware size, etc, actually. For example, the range of the size of the motion vector may be $\pm 7$ picture elements or $\pm 15$ picture elements from the origin which is the center. Further, its accuracy may be 1 picture element unit or 0.5 picture element unit.

A case where such a motion vector is variable-length-coded will be considered. For instance, in the case where a motion vector lying within the range of $\pm 7$ picture elements and a motion vector lying within the range of $\pm 15$ picture elements are coded two kinds of variable length coding tables are needed. At this time, the table for the range of $\pm 7$ picture elements with 1 picture element accuracy becomes a table which has 15 kinds of elements 7, 6, ..., 0, ..., -6, -7, while the table of the range of $\pm 15$ picture elements becomes a table which has 31 kinds of elements 15, 14, ..., 0, ..., - 14, -15. In addition, the table for the range of $\pm 7$ picture elements with 0.5 picture element becomes a table which has 29 kinds of elements 7.0, 6.5, ..., 0, .... -6.5, -7.0.

In this way, when there are plural kinds of motion vector ranges and when there are plural kinds of accuracies, the number of necessary tables increase to elevate the burden of hardware.

An object of this invention is, therefore, to provide a variable length coding method for motion vector which can reduce the load imposed on the hardware when there are plural kinds of motion vector ranges and accuracies.

According to the invention, there is provided a method of producing variable length codes VLC representing motion vectors indicative of motion within images comprising the steps of:

producing motion vectors from image data, and variable length coding (VLC) the motion vectors; wherein the step of variable length coding includes storing a table of VLC data representing a predetermined set of motion vector values in a memory circuit, and

in response to the motion vectors, reading out the stored VLC data and characterized by producing in response to the motion vertors data additional to VLC data read out of the memory circuit and which changes the values represented by the VLC data or part of the VLC data; and

combining the said VLC data with the additional data.

In a preferred embodiment, the additional data changes the range and/or accuracy of the sais VLS data.

In another preferred embodiment, the additional data changes the values represented by a portion of the stored VLS data

The above, and other, objects, features and advantages of the present invention will become readily apparent from the following detailed description thereof which is to be read in connection with the accompanying drawings, in which:

Figures 1A and 1B are diagrams showing the concept of a motion vector;
Figure 2 is a block diagram showing a circuit for motion vector detection and coding;
Figure 3 is a diagram showing one example of a variable length coding table;
Fig. 4 is a diagram showing one example of a variable length coding table;
Fig. 5 is a diagram showing one example of a motion vector coding circuit;
Fig. 6 is a diagram showing one example of a motion vector decoding circuit;
Fig. 7 is a diagram showing one example of a variable length coding table;
Fig. 8 is a diagram showing one example of a variable length coding table; and
Fig. 9 is a diagram showing one example of a variable length coding table.

Hereunder, one embodiment of the invention will be described referring to the drawings. In this embodiment, the variable length coding is done for a motion vector within the range of ±2 picture elements with the 1 picture element accuracy and a motion vector within the range of ±4 picture elements with the 1 picture element accuracy.

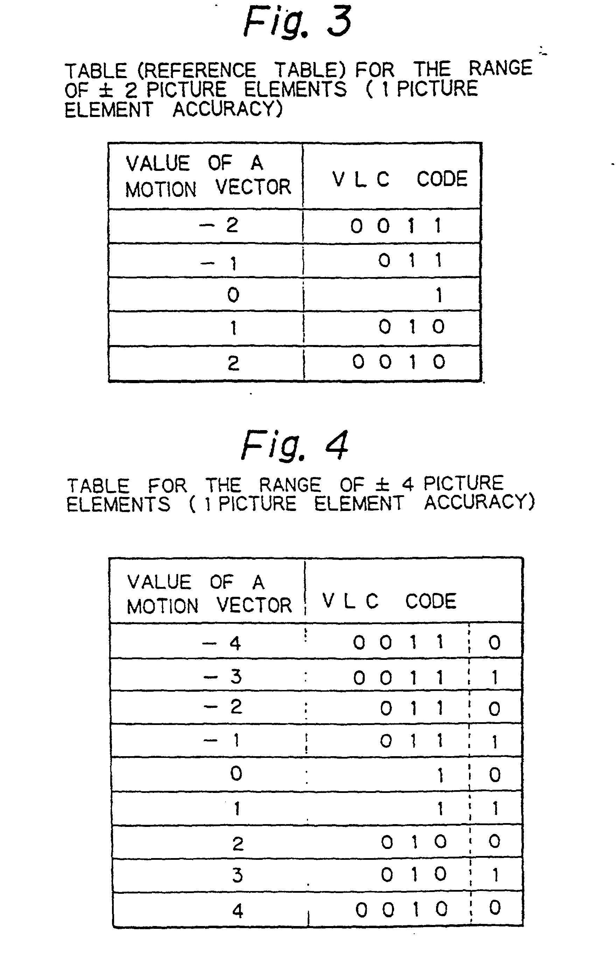

Fig. 3 indicates a variable length coding table for the range of ± picture elements with the 1 picture element accuracy (the relationship between a value of a motion vector and a VLC code). The table has 5 kinds of elements 2, 1, 0, -1, and -2.

The variable length coding of a motion vector lying within the range of ±4 picture elements is performed based on a variable length coding table for ± two-picture element range.

First, assuming that the value of a motion vector is X, a quotient Y and a remainder Z are obtained by the division of X by two.

$$X = 2*Y + Z \qquad (1)$$

Next, a VLC code is provided by adding a remainder Z as an additional bit to a VLC code (coded at the table of Fig. 3) corresponding to the quotient Y. As a result, this is equivalent to the coding with the 1 picture element accuracy at the variable length coding table for ± four-picture element range as shown in Fig. 4 and the variable length table shown in Fig. 3 is expanded consequently. The variable length coding table of Fig. 4 has nine kinds of elements 4, 3, ..., 0, ..., -3, -4.

On the other hand, for the coding of a motion vector within the range of ±2 picture elements with the 1 picture element accuracy, a VLC code corresponding to the motion vector X is directly obtained using the variable length coding table shown in Fig. 3.

With this, on the basis of the variable length coding table of the range of ± 2 picture elements with the 1 picture element accuracy, the coding of a motion vector within the range of ± 2 picture elements with the 1 picture element accuracy as well as the coding of a motion vector within the range of ±4 picture elements with the 1 picture element accuracy can be made.

As mentioned above, a coded motion vector can be reproduced correctly on the decoder side with the operation reverse with the above-mentioned one by transmitting a flag indicative of whether the motion vector is within the range of ± 2 picture elements or within the range of ±4 picture elements.

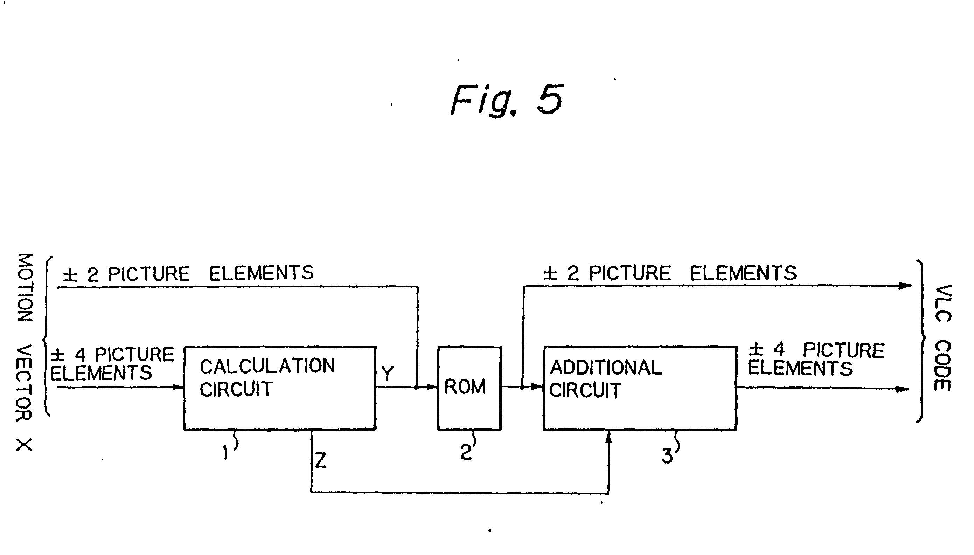

Fig. 5 is an example of a circuit for coding a motion vector within the range of ± 2 picture elements with the 1 picture element accuracy as well as for coding of a motion vector within the range of ±4 picture elements with the 1 picture element accuracy on the basis of a variable length coding table for ± 2 picture elements with the 1 picture element accuracy.

In Fig. 5, reference numeral 1 denotes a calculation circuit to which a motion vector within the range ± 4 picture elements is supplied. At the calculation circuit 1, the above-mentioned calculation of equation (1) is done so that a quotient Y and a remainder Z are produced.

Reference numeral 2 indicates a ROM, which constructs a variable length coding table shown in Fig. 3. The ROM 2 is directly supplied with a motion vector as an address when the motion vector lies within the range of ± 2 picture elements, while the quotient Y which is produced from the calculation circuit 1 when the motion vector lies with the range of ±4 picture elements.

When the motion vector is within the range of ± 2 picture elements, the output of the ROM 2 is produced as a VLC code. Meanwhile, in the case where the motion vector lies in the range of ±4 picture elements, the remainder Z given from the calculation circuit 1 is added to the output of the ROM 2 as an additional bit by the additional circuit 3 to provide a VLC code as an output.

In this way, in the example, the coding of the motion vector within the range of ± 2 picture elements with the 1 picture element accuracy as well as that of the motion vector within the range of ± 4 picture elements with the 1 picture element accuracy can be made using the single variable length coding table (ROM 2) to reduce the burden of the hardware.

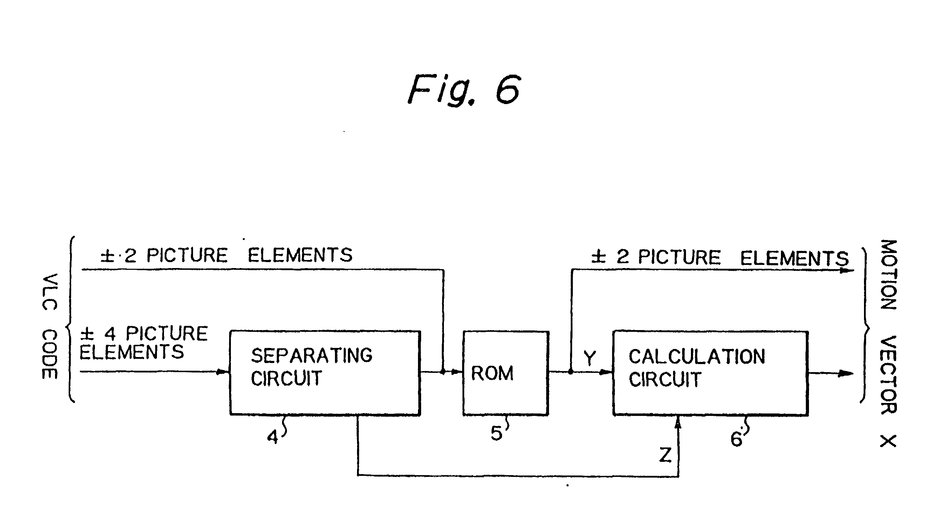

Fig. 6 shows a decoding circuit corresponding to a coding circuit shown in Fig. 5. It is judged based on a flag sent with a VLC code whether the VLC code relates to a motion vector within the range of ±2 picture elements or a motion vector within the range of ±4 picture elements.

In Fig. 6, reference numeral 4 denotes a separating circuit, which is supplied with a VLC code relating to a motion vector within the range of ± 4 picture elements. The separation into an additional bit (remainder Z) and the other bits is carried out at the separating circuit 4.

Also, reference numeral 5 indicates a ROM, which constitutes a conversion table reverse with the variable length coding table of Fig. 3. To the ROM 5, a VLC code is directly supplied as an address when the VLC code relates to a motion vector lying within the range of ± 2 picture elements. On the other hand, when the VLC code relates to a motion vector lying within the range of ± 4 picture elements, bits other than the additional bit separated at the separating circuit 4 are supplied as an address.

In the case where the VLC code relates to a motion vector lying within the range of ± 2 picture elements, the output of the ROM 5 is produced as a motion vector. Meanwhile, when the VLC code relates to a motion vector lying within the range of ±4 picture element, the output of the calculation circuit 6 is produced as a motion vector. As a result, X is obtained in the calculation circuit 6 from the output Y of the ROM 5 and an additional bit Z separated at the separating circuit 4 by the use of equation (1).

Next, an example where coding of a motion vector within the range of ± 2 picture elements with the 1 picture element accuracy as well as coding of a motion vector within the range of ± 2 picture elements with the 0.5 picture element accuracy will be explained.

The coding of a motion vector within the range of ± 2 picture elements with the 0.5 picture element accuracy is done based on the variable length coding table shown in Fig. 3.

First, assuming that the value of a motion vector is X, a quotient Y and a remainder Z are provided by the division of 2X by 2.

$$2*X = 2*Y + Z \qquad (2)$$

Now, assuming that Y, Z are integers, Y becomes an integer part of X. Meanwhile, Z becomes the value equal to twice the decimal part to be "0" or "1".

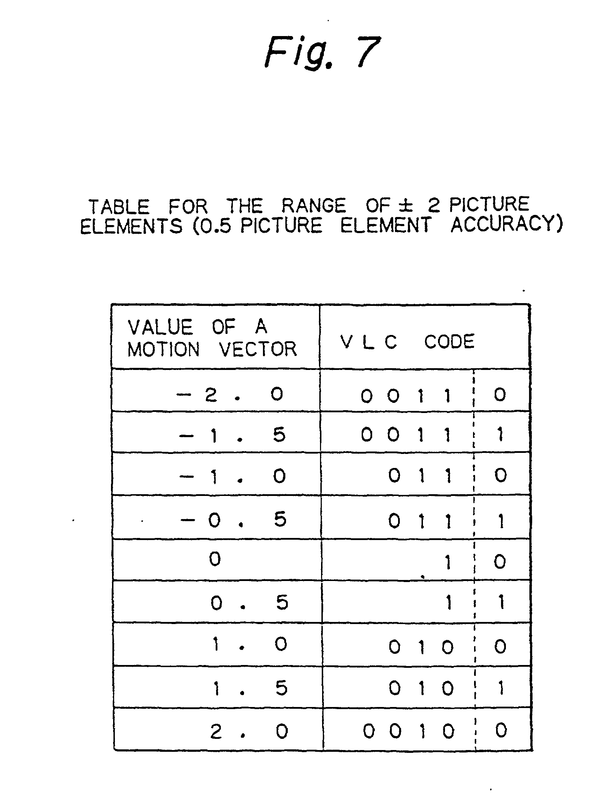

Next, a VLC code is provided by adding a remainder Z as an additional bit to a VLC code (coded at the table of Fig. 3) corresponding to the quotient Y. Consequently, this is equivalent to the coding with the 0.5 picture element accuracy at the variable length coding for ± two-picture element range as shown in Fig. 7 and the variable length coding table shown in Fig. 3 is expanded resultantly. The variable length coding table of Fig. 7 has nine kinds of elements 2.0, 1.5, ..., 0, ..., -1.5, -2.0.

Meanwhile, for the coding of a motion vector within the range of ± 2 picture elements with the 1 picture element accuracy, a VLC code corresponding to a motion vector X is directly obtained using the variable length coding table shown in Fig. 3.

As a result, on the basis of the variable length coding table for the range of ± 2 picture elements with the 1 picture element accuracy, not only the coding of a motion vector within the range of ± 2 picture elements with the 1 picture element accuracy but also the coding of a motion vector within the range of ± 2 picture elements with the 0.5 picture element accuracy can be performed.

As stated above, a coded motion vector can be reproduced accurately on the decoder side with the operation reverse with the above-mentioned one by transmitting a flag indicating whether the motion vector is within the 1 picture element accuracy or within the 0.5 picture element accuracy.

Based on the variable length coding table for the range of ± 2 picture elements with the 1 picture element accuracy, circuits for coding and decoding a motion vector within the range of ± 2 picture elements with the 1 picture element accuracy and a motion vector within the range of ± 2 picture elements with the 0.5 picture element accuracy can be composed of similarly to those of Figs. 5 and 6. The coding can be made using one variable length coding table (ROM 2) to reduce the burden of hardware.

Next, the case where a motion vector is subjected to DPCM (Differential PCM) and where only a difference with a motion vector of an adjacent block is transmitted is considered.

For instance, when the value of a motion vector of a certain block is 4, 4 - 3 = 1 is provided if the value of next motion vector is 3. In this case, only the value 1 of the difference is transmitted. With this, since transmission is done with VLC code shorter than a VLC code corresponding to 4, advantageous transmission can be made.

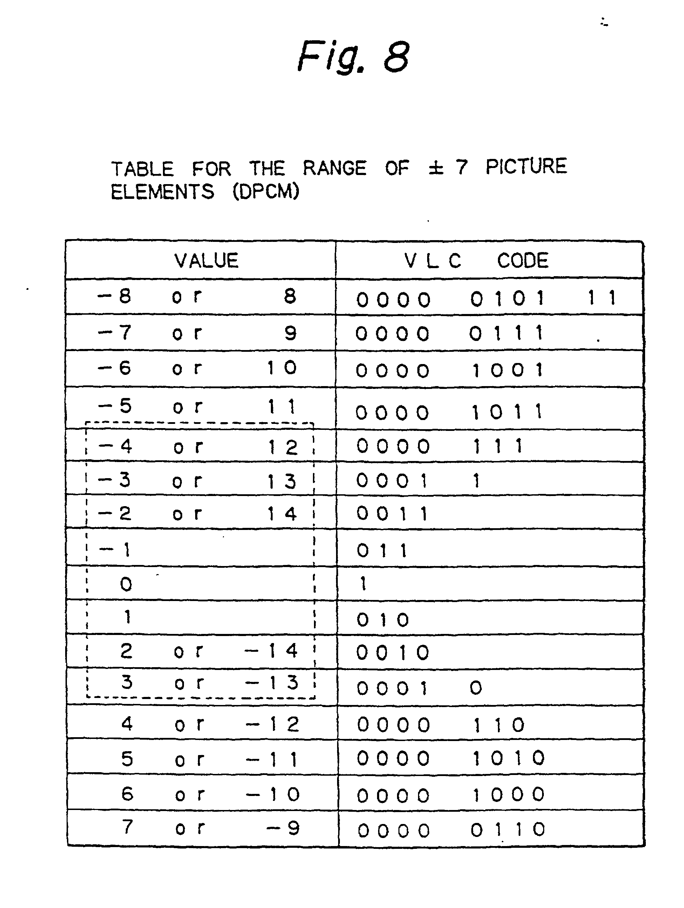

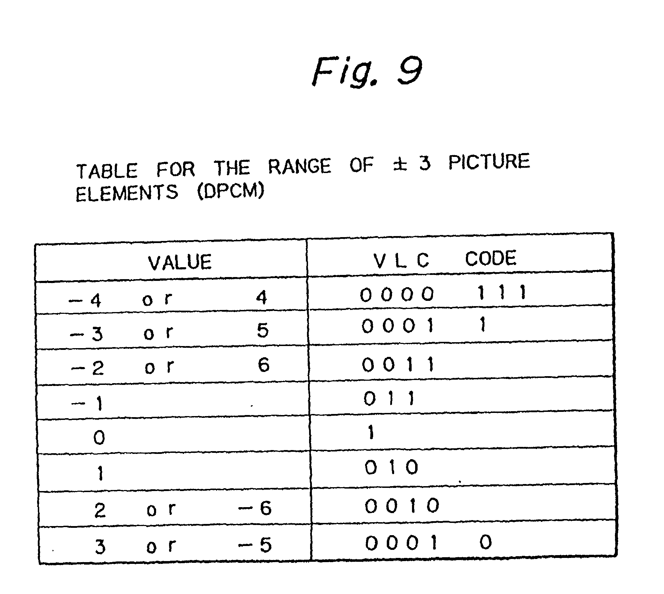

Now, in the DPCM of a motion vector, there is a method which is called the reflected DPCM method. This is a method used in DPCM of a value whose range is determined like a motion vector. For example, two values are allotted to one VLC code as shown in Figs. 8 and 9. Figs. 8 and 9 are variable length coding tables for DPCM transmission of motion vectors lying within the range of ± 7 picture elements with the 1 picture element accuracy and ± 3 picture elements with the 1 picture element accuracy.

In Fig. 9, since the range of a motion vector is ± 3 picture elements, the result of DPCM becomes ± 6. For example, assuming that the value of a previous motion vector is 3 and that the value of a present motion vector is 1, 3 - 1 = 2 is established. Consequently, the VLC code is "0010".

In the case where the reproduction into a motion vector is made after the transmission of this code, the VLC code is "0010". Therefore, the value is 2 or -6. At this time, since the decoder side knows that the value of a previous motion vector is 3, the value of the motion vector is 3 - 2 = 1 or 3 - (-6) = 9. Now, because the motion vector lies in the range of ± 3 picture elements, it cannot take 9 to become 1.

In the above-described reflected DPCM method, a table proportional to the range of a motion vector is necessary. For this reason, in the case where the variable length coding through DPCM is done for a motion vector whose range covers ± 7 picture elements and ± 3 picture elements, for example, there is a method in which the variable length coding tables shown in Figs. 8 and 9 are prepared. Also, for example, there is a method in which only the variable length coding table shown in Fig. 8 is prepared so that values ± 6 of DPCM of a motion vector within the range of ± 3 picture elements are variable length coded depending on the table shown in Fig. 8.

In the former method, since two tables are needed, the load imposed on the hardware becomes great. On the other hand, in the latter method, the probability that a longer code is generated becomes high in the table of Fig. 8 as compared with that of Fig. 9 and efficiency is degraded consequently.

To eliminate these disadvantages, a flag indicative of the range of a motion vector is provided as in the above-mentioned embodiment. For variable length coding the motion vector, only the table shown Fig. 8 is prepared. In this case, if the range of the motion vector is ± 7 picture elements, the coding is done using the entire table. Meanwhile, if the range is ±3 picture elements, the broken portion is replaced by the table shown in Fig. 9 for coding.

By transmitting a flag indicating the range of a motion vector together with a thus coded VLC code, the motion vector is correctly reproduced by preparing a reference table shown in Fig. 8 on the decoder side and decoding by the replacement of the table of Fig. 8 with the table of Fig. 9 only when the flag indicating the range of the motion vector shows the range of ± 3 picture elements.

In this manner, by the use and replacement of a reference table, the hardware burden can be decreased as compared with the case of provision of plural tables.

In an embodiment of the invention, a reference variable length coding table suffices for plural kinds of motion vector ranges and accuracies to decrease the burden of the an embodiment of hardware. Also, since an embodiment of invention can be adapted to a motion vector of a broad range by expanding the reference table and be further adapted to a motion vector of a narrow range, there is an advantage that flexibility increases. Further, as to the accuracy, the accuracy can be elevated by expanding the reference table.

Having described a specific preferred embodiment of the present invention with reference to the accompanying drawings, it is to be understood that the invention is not limited to that precise embodiment, and that various changes and modifications may be effected therein by one skilled in the art without departing from the scope of the invention as defined in the appended claims.

**Claims**

1. A method of producing variable length codes VLC representing motion vectors indicative of motion within images comprising the steps of:

    producing motion vectors from image data, and variable length coding (VLC) the motion vectors; wherein the step of variable length coding includes storing a table of VLC data representing a predetermined set of motion vector values in a memory circuit (2), and in response to the motion vectors, reading out the stored VLC data and charactired by producing in response to the motion vectors data additional to VLC data read out of the memory circuit (2) and which changes the values represented by the VLC data or part of the VLC data; and combining the said VLC data with the additional data,

2. A method according to Claim 1, wherein the said additional data changes the range and/or accuracy of the said VLC data.

3. A method according to Claim 1 or 2, wherein the stored VLC data are read out of the memory circuit without production of the additional data when the said motion vector values are represented by the stored VLC data; and, the stored VLC data are read out and the additional data produced when the motion vectors have the said changed values.

4. A method according to Claim 3, wherein motion vector values are applied directly to the memory circuit (2) as addresses to read out the VLC data without additional data, and

    addresses for the memory circuit (2) and to produce the additional data are derived from motion vector values having the changed values.

5. A method according to Claim 4, wherein a quotient (Y) is used as the said address and a remainder (Z) as the additional data, the quotient and remainder being obtained by the division of the value of the motion vector by two.

6. A method according to any one of claims 3 to 5, wherein the memory circuit (2) stores a variable length coding table representing a range of plus or minus two picture elements with a one picture element accuracy and the additional data changes the VLC data to represent motion vector values within the range plus or minus four picture elements with one picture element accuracy.

7. A method according to Claim 1, 2 or 3, wherein the VLC data is data representing differences between motion vector values.

8. A method according to Claim 7, wherein the said additional data changes the values represented by a portion of the stored VLC data.

9. A method according to any preceding claim, wherein the memory circuit comprises a ROM.

**Patentansprüche**

1. Verfahren zum Erzeugen von variablen Längencodes VLC, die Bewegungsvektoren repräsentieren, welche für die Bewegung innerhalb von Bildern kennzeichnend sind,

    mit den Verfahrensschritten:
    Erzeugen von Bewegungsvektoren aus Bilddaten und
    variable Längencodierung (VLC) der Bewegungsvektoren, wobei der Verfahrensschritt der variablen Längencodierung das Speichern einer Tabelle mit VLC-Daten in einer Speicherschaltung (2) umfaßt, die einen vorbestimmten Satz von Bewegungsvektorwerten repräsentieren und

Auslesen der gespeicherten VLC-Daten in Abhängigkeit von den Bewegungsvektoren, **gekennzeichnet durch**

das Erzeugen von Daten in Abhängigkeit von den Bewegungsvektoren zusätzlich zu den aus der Speicherschaltung (2) ausgelesenen VLC-Daten, wobei diese zusätzlichen Daten die **durch** die VLC-Daten oder einen Teil der VLC-Daten repräsentierten Werte ändern, und das Kombinieren der VLC-Daten mit den zusätzlichen Daten.

2. Verfahren nach Anspruch 1, bei dem die zusätzlichen Daten den Bereich und/oder die Genauigkeit der VLC-Daten ändern.

3. Verfahren nach Anspruch 1 oder 2, bei dem die gespeicherten VLC-Daten ohne das Erzeugen der zusätzlichen Daten aus der Speicherschaltung ausgelesen werden, wenn die Bewegungsvektorwerte durch die gespeicherten VLC-Daten repräsentiert werden, und bei der die VLC-Daten ausgelesen und die zusätzlichen Daten erzeugt werden, wenn die Bewegungsvektoren die genannten geänderten Werte haben.

4. , Verfahren nach Anspruch 3, bei dem

Bewegungsvektorwerte der Speicherschaltung (2) direkt als Adressen zugeführt werden, um die VLC-Daten ohne zusätzliche Daten auszulesen, und

Adressen für die Speicherschaltung (2) und zum Erzeugen der zusatzlichen Daten aus Bewegungsvektorwerten abgeleitet werden, die die geänderten Werte haben.

5. Verfahren nach Anspruch 4, bei dem ein Quotient (Y) als die genannte Adresse und ein Rest (Z) als die zusätzlichen Daten benutzt werden, wobei der Quotient und der Rest dadurch gewonnen werden, daß der Wert des Bewegungsvektors durch zwei dividiert wird.

6. Verfahren nach einem der Ansprüche 3 bis 5, bei dem die Speicherschaltung eine Tabelle zur variablen Längencodierung speichert, die einen Bereich von plus oder minus zwei Bildelementen mit einer Genauigkeit von einem Bildelement repräsentiert, und die zusätzlichen Daten die VLC-Daten verändern, um Bewegungsvektorwerte innerhalb eines Bereichs von plus oder minus vier Bildelementen mit einer Genauigkeit von einem Bildelement darzustellen.

7. Verfahren nach Anspruch 1, 2 oder 3, bei dem die VLC-Daten Daten sind, die Differenzen zwischen Bewegungsvektorwerten repräsentieren.

8. Verfahren nach Anspruch 7, bei dem die zusätzlichen Daten die durch einen Teil der gespeicherten VLC-Daten repräsentierten Werte ändern.

9. Verfahren nach einem der vorhergehenden Ansprüche, bei dem die Speicherschaltung ein ROM umfaßt.

## Revendications

1. Procédé de production de codes à longueur variable notés VLC représentant des vecteurs mouvements indicatifs d'un déplacement à l'intérieur d'images, comprenant les opérations suivantes:

produire des vecteurs mouvements à partir de données d'image, et

effectuer le codage à longueur variable (VLC) des vecteurs mouvements; où l'opération de codage à longueur variable comporte le stockage d'une table de données VLC représentant un ensemble prédéterminé de valeurs de vecteurs mouvements dans un circuit de mémorisation (2), et

en réponse aux vecteurs mouvements, lire les données VLC stockées,

et **caractérisé en ce qu'**il est produit, en réponse aux vecteurs mouvements, des données qui viennent en supplément aux données VLC lues dans le circuit de mémorisation (2), et qui modifient les valeurs représentées par les données VLC ou une partie des données VLC ; et combiner lesdites données VLC avec les données supplémentaires.

2. Procédé selon la revendication 1, où lesdites données supplémentaires modifient l'intervalle et, ou bien, la précision desdites données VLC.

3. Procédé selon la revendication 1 ou 2, où les données VLC stockées sont lues dans le circuit de mémorisation sans production des données supplémentaires lorsque lesdites valeurs des vecteurs mouvements sont représentées par les données VLC stockées ; et les données VLC stockées sont lues et les données supplémentaires produites lorsque les vecteurs mouvements ont lesdites valeurs modifiées.

4. Procédé selon la revendication 3, où les valeurs des vecteurs mouvements sont appliquées directement au circuit de mémorisation (2) en tant qu'adresses de lecture des données VLC sans données additionnelles, et

les adresses destinées au circuit de mémorisation (2) et servant à produire les données supplémentaires sont déduites des valeurs des vecteurs mouvements dont les valeurs ont été modifiées.

5. Procédé selon la revendication 4, où un quotient (Y) est utilisé au titre de ladite adresse et un reste (Z) au titre des données supplémentaires, le quotient et le reste étant obtenus par division, par deux, de la valeur du vecteur mouvement.

6. Procédé selon l'une quelconque des revendications 3 à 5, où le circuit de mémorisation (2) stocke une table de codage à longueur variable qui représente un intervalle de ± 2 éléments d'image ayant une précision de 1 élément d'image, et les données supplémentaires modifient les données VLC pour représenter des valeurs de vecteurs mouvements comprises à l'intérieur de l'intervalle de ± 4 éléments d'image avec une précision de 1 élément d'image.

7. Procédé selon la revendication 1, 2 ou 3, où les données VLC sont des données représentant les différentes entre des valeurs de vecteurs mouvements.

8. Procédé selon la revendication 7, où lesdites données supplémentaires modifient les valeurs représentées par une partie des données VLC stockées.

9. Procédé selon l'une quelconque des revendications précédentes, où le circuit de mémorisation comprend une mémoire morte, ou ROM.

# Fig. 1 A

OBJECTIVE BLOCK

# Fig. 1 B

MOTION VECTOR

# Fig. 2

EP 1 032 210 B1

PICTURE DATA →

| MOTION VECTOR DETECTING CIRCUIT |
|---|

→ MOTION VECTOR →

| VARIABLE-LENGTH CODING CIRCUIT |
|---|

→ VLC CODE

10

20

# *Fig. 3*

TABLE (REFERENCE TABLE) FOR THE RANGE OF ± 2 PICTURE ELEMENTS ( 1 PICTURE ELEMENT ACCURACY)

| VALUE OF A MOTION VECTOR | V L C CODE |
|---|---|
| − 2 | 0 0 1 1 |
| − 1 | 0 1 1 |
| 0 | 1 |
| 1 | 0 1 0 |
| 2 | 0 0 1 0 |

# *Fig. 4*

TABLE FOR THE RANGE OF ± 4 PICTURE ELEMENTS ( 1 PICTURE ELEMENT ACCURACY)

| VALUE OF A MOTION VECTOR | V L C CODE | |
|---|---|---|
| − 4 | 0 0 1 1 | 0 |
| − 3 | 0 0 1 1 | 1 |
| − 2 | 0 1 1 | 0 |
| − 1 | 0 1 1 | 1 |
| 0 | 1 | 0 |
| 1 | 1 | 1 |
| 2 | 0 1 0 | 0 |
| 3 | 0 1 0 | 1 |
| 4 | 0 0 1 0 | 0 |

# Fig. 5

# Fig. 6

VLC CODE

±·2 PICTURE ELEMENTS

± 4 PICTURE ELEMENTS

SEPARATING CIRCUIT

4

ROM

5

Y

CALCULATION CIRCUIT

6

Z

± 2 PICTURE ELEMENTS

MOTION VECTOR X

# Fig. 7

TABLE FOR THE RANGE OF ± 2 PICTURE
ELEMENTS (0.5 PICTURE ELEMENT ACCURACY)

| VALUE OF A MOTION VECTOR | V L C   CODE |
|---|---|
| − 2 . 0 | 0 0 1 1 ┊ 0 |
| − 1 . 5 | 0 0 1 1 ┊ 1 |
| − 1 . 0 | 0 1 1 ┊ 0 |
| − 0 . 5 | 0 1 1 ┊ 1 |
| 0 | 1 ┊ 0 |
| 0 . 5 | 1 ┊ 1 |
| 1 . 0 | 0 1 0 ┊ 0 |
| 1 . 5 | 0 1 0 ┊ 1 |
| 2 . 0 | 0 0 1 0 ┊ 0 |

# Fig. 8

TABLE FOR THE RANGE OF ± 7 PICTURE ELEMENTS (DPCM)

| VALUE | | | VLC CODE |
|---|---|---|---|
| − 8 | o r | 8 | 0 0 0 0   0 1 0 1   1 1 |
| − 7 | o r | 9 | 0 0 0 0   0 1 1 1 |
| − 6 | o r | 1 0 | 0 0 0 0   1 0 0 1 |
| − 5 | o r | 1 1 | 0 0 0 0   1 0 1 1 |
| − 4 | o r | 1 2 | 0 0 0 0   1 1 1 |
| − 3 | o r | 1 3 | 0 0 0 1   1 |
| − 2 | o r | 1 4 | 0 0 1 1 |
| − 1 | | | 0 1 1 |
| 0 | | | 1 |
| 1 | | | 0 1 0 |
| 2 | o r | − 1 4 | 0 0 1 0 |
| 3 | o r | − 1 3 | 0 0 0 1   0 |
| 4 | o r | − 1 2 | 0 0 0 0   1 1 0 |
| 5 | o r | − 1 1 | 0 0 0 0   1 0 1 0 |
| 6 | o r | − 1 0 | 0 0 0 0   1 0 0 0 |
| 7 | o r | − 9 | 0 0 0 0   0 1 1 0 |

# Fig. 9

TABLE FOR THE RANGE OF ± 3 PICTURE ELEMENTS (DPCM)

| VALUE | | | V L C CODE |
|---|---|---|---|
| − 4 | o r | 4 | 0 0 0 0   1 1 1 |
| − 3 | o r | 5 | 0 0 0 1   1 |
| − 2 | o r | 6 | 0 0 1 1 |
| − 1 | | | 0 1 1 |
| 0 | | | 1 |
| 1 | | | 0 1 0 |
| 2 | o r | − 6 | 0 0 1 0 |
| 3 | o r | − 5 | 0 0 0 1   0 |

EP 1 032 210 B1